# EUROPÄISCHE PATENTSCHRIFT

(11) **EP 1 868 833 B1**
(45) Veröffentlichungstag und Bekanntmachung des Hinweises auf die Patenterteilung: **03.06.2009**
(21) Anmeldenummer: 06723997.0
(22) Anmeldetag: 04.04.2006
(51) Int. Cl.: B60K 7/00, B66F 9/075

(54) **ANTRIEB FÜR EIN FLURFÖRDERZEUG**
DRIVE UNIT FOR AN INDUSTRIAL TRUCK
ENTRAINEMENT POUR UN CHARIOT DE MANUTENTION

(30) Priorität: 15.04.2005 DE 102005017737
(43) Veröffentlichungstag der Anmeldung: 26.12.2007
(60) Teilanmeldung: 08165898.1
(73) Patentinhaber: ZF Friedrichshafen AG, 88038 Friedrichshafen (DE)
(72) Erfinder: BALD, Dirk, 99867 Gotha (DE); HABEL, Matthias, 99867 Gotha (DE); STREIPARDT, Peter, 99880 Waltershausen (DE)
(86) Internationale Anmeldenummer: PCT/EP2006/003039
(87) Internationale Veröffentlichungsnummer: WO 2006/108531

(56) Entgegenhaltungen:
- EP-A- 0 697 759
- EP-A- 1 334 895
- WO-A-98/19875
- DE-A1- 10 148 457
- DE-A1- 10 241 420
- DE-A1- 10 328 651
- US-A1- 2003 006 084

## Beschreibung

Die Erfindung bezieht sich auf einen Antrieb, insbesondere für ein Flurförderzeug, nach der im Oberbegriff von Anspruch 1 näher definierten Art.

Gattungsgemäße Antriebe bestehen aus einem elektrischen Antriebsmotor, welcher über ein Untersetzungsgetriebe ein Antriebsrad antreibt, um das Fahrzeug in einer Fahrbewegung anzutreiben.

Die DE 102 41 420 A1 offenbart einen Anrieb für ein Flurförderzeug, bei welchem ein horizontal angeordneter Antriebsmotor über ein Untersetzungsgetriebe ein Antriebsrad antreibt, wobei ein Umrichter innerhalb des Motorgehäuses angeordnet ist. Dadurch verlängert sich der Motor in vertikaler Richtung, wodurch der Motor nur in Fahrzeugen mit größerem Platzangebot eingebaut werden kann.

Die DE 102004006722.8 der Anmelderin offenbart einen Antrieb für ein Flurförderzeug, bei welchem der Antriebsmotor mit einem Lenkmotor koaxial angeordnet ist und die Motore vertikal im Fahrzeug angeordnet sind.

Die DE 101 48 457 A1 offenbart einen Antrieb für ein Flurförderzeug, bei welchem ein Antriebsmotor mit einer um eine Drehachse drehende Welle über ein Untersetzungsgetriebe ein Antriebsrad antreibt, wobei der Antriebsmotor im eingebauten Zustand im Fahrzeug vertikal angeordnet ist, und das Antriebsrad im Sinne einer Lenkbewegung drehbar ausgeführt ist, wobei der Antriebsmotor während der Lenkbewegung der Drehbewegung des Fahrzeugrades folgt, und wobei eine elektronische Steuerung parallel zur Drehachse der Welle am Gehäuse des Antriebsmotors angeordnet ist.

Der vorliegenden Erfindung liegt die Aufgabe zugrunde, einen Antrieb, insbesondere für Flurförderzeuge, zu schaffen, welcher auf einfache Weise im Fahrzeug montiert werden kann und sich durch eine hohe Betriebssicherheit auszeichnet.

Die Aufgabe wird mit einem, die kennzeichnenden Merkmale des Hauptanspruchs aufweisenden, gattunggemäßen Antrieb gelöst.

Dadurch ist es möglich, ein Antriebssystem zu schaffen, welches sich durch geringere Verkabelungen und einfache Steckverbindungen durch eine hohe Betriebssicherheit auszeichnet und die Montage des Systems vereinfacht wird, da ausschließlich Leitungen zur Spannungsversorgung und Signalleitungen zum Antrieb benötigt werden. Durch die Anordnung der elektronischen Steuerung bei vertikalem Motor an dessem Umfang wird die Baulänge des Gesamtfahrzeugs, insbesondere die Baulänge hinter den Gabeln, nicht vergrößert. Der Antrieb kann für elektrisch angetriebene Fahrzeuge, wie beispielsweise der Lagertechnik oder Dreirad-Gegengewichtsstapler oder fahrerlose Transportsysteme, wie beispielsweise selbstfahrende Reinigungsmaschinen und Flurförderzeuge, verwendet werden.

In einer weiteren Ausgestaltungsform der Erfindung besteht die elektronische Steuerung aus einem Wechselrichter, welcher sich aus einer Leistungselektronik und einer Signalelektronik zusammensetzt. Die Leistungselektronik und Signalelektronik können, je nach Bauraumverhältnissen im Fahrzeug, in einem gemeinsamen Gehäuse am Antriebsmotor angebracht oder im Gehäuse des Antriebsmotors integriert sein oder räumlich getrennt am oder im Antriebsmotor angeordnet sein. Besteht der Antrieb zusätzlich aus einem Antriebsmotor als Fahrmotor und einem Antriebsmotor als Lenkmotor, so besteht die Möglichkeit, die Leistungselektronik des Lenkmotors und die Leistungselektronik des Antriebsmotors räumlich getrennt am Antriebsmotor anzuordnen und die Signalelektronik des Lenkmotors und die Signalelektronik des Antriebsmotors räumlich zusammenzufassen und ebenfalls am Antriebsmotor anzuordnen.

Ausführungsbeispiele sind der Figuren-Beschreibung zu entnehmen. Es zeigen:

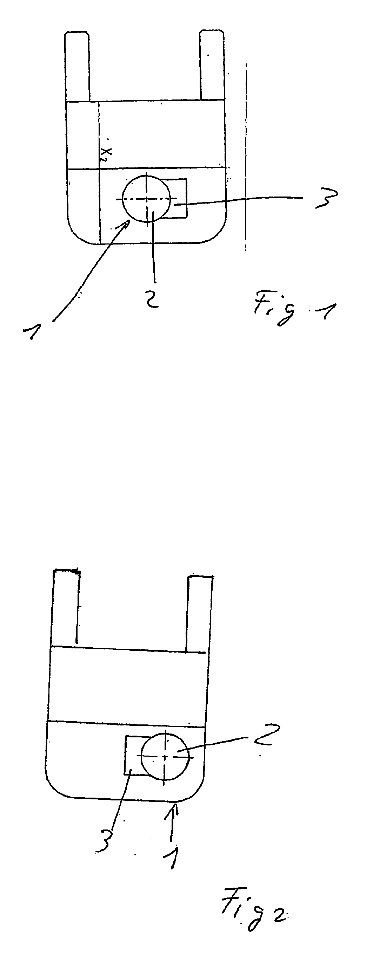

- Fig. 1: eine schematische Darstellung eines Flurförderzeugs mit mittig angeordnetem Fahrzeugmotor;
- Fig. 2: eine schematische Darstellung eines Flurfiörderzeugs mit seitlich angeordnetem Fahrzeugmotor;
- Fig. 3: eine schematische Darstellung eines vertikal angeordneten Fahrzeugmotors;
- Fig. 4: eine schematische Darstellung eines vertikal angeordneten Fahrzeugmotors;
- Fig. 5: eine Ansicht eines Antriebs mit horizontal angeordnetem Fahrzeugmotor und
- Fig. 6: eine Ansicht eines im Fahrzeugrad horizontal angeordne- ten Fahrzeugmotors.

### Fig. 1:

Der Bauraum für den Antrieb 1 ist insbesondere in Fahrzeuglängsrichtung sehr beschränkt. Durch Verlängerung der Baulänge des Fahrzeugs würde sich die Wendigkeit auf kleinstem Raum, welche beispielsweise in schmalen Gängen, zwischen Regalen oder auf Lkws benötigt wird, verschlechtern. Da die Länge des Batterietanks nicht verändert werden kann, wird die Länge des Fahrzeugs durch den benötigten Bauraum des Antriebssystems bestimmt. Zusätzlich sind im Fahrzeug noch weitere Komponenten, wie beispielsweise die Hubhydraulik oder der Öltank, anzuordnen. Der Antriebsmotor 2, welcher beispielsweise als Drehstrom-Motor ausgebildet werden kann, ist vertikal im Fahrzeug angeordnet. Bei Fahrzeugen, bei welchen der Antriebsmotor 2 drehfest mit dem Fahrzeug verbunden ist und sich somit bei einer Lenkbewegung nicht mitdreht, ist die elektronische Steuerung 3 an der Seite des Antriebsmotors anzubringen, welche zur Fahrzeugseite des Fahrzeugs weist und somit von den Seiten in Fahrzeuglängsrichtung abgewandt ist. Dadurch wird das Fahrzeug in Längsrichtung nicht verlängert. Die elektronische Steuerung 3 kann mit dem Gehäuse des Antriebsmotors 2 verbunden sein, es besteht jedoch auch die Möglichkeit, die elektronische Steuerung 3 in das Gehäuse des Antriebsmotors 2 zu integrieren. Bei mittiger Anordnung des Antriebsmotors 2 besteht die Möglichkeit, die elektronische Steuerung auf der rechten oder linken Seite anzuordnen, je nachdem, an welcher Stelle hydraulische Komponenten im Fahrzeug angeordnet sind, und dadurch dieser Bauraum nicht zur Verfügung steht. Die elektronische Steuerung 3 kann somit auf der gegenüberliegenden Seite der hydraulischen Komponenten, jedoch in Richtung Fahrzeugseite und nicht in Längsrichtung des Fahrzeugs, angeordnet sein. Es besteht auch die Möglichkeit, die elektronische Steuerung 3 in mehrere Komponenten aufzuteilen und diese an gegenüberliegenden Seiten des Antriebsmotors, jedoch in Richtung Fahrzeugseite, anzuordnen. Die Steuerungen können dabei in ihrer Erstreckung unterschiedlich ausgeprägt sein und sind somit, je nach Bauraum, breiter und kürzer oder schmaler und länger auszuführen.

### Fig.2:

Bei Fahrzeugen, an welchem der Antrieb 1 auf einer Fahrzeugseite angeordnet und der Antriebsmotor als nicht mitdrehender Motor im Sinne einer Lenkbewegung ausgebildet ist, ist die elektronische Steuerung 3 einseitig am Antriebsmotor 2, in Richtung Fahrzeugmitte hin, anzuordnen. Dadurch wird eine maximale Spurweite gewährleistet, wodurch eine größtmögliche Standsicherheit des Fahrzeugs erreicht wird.

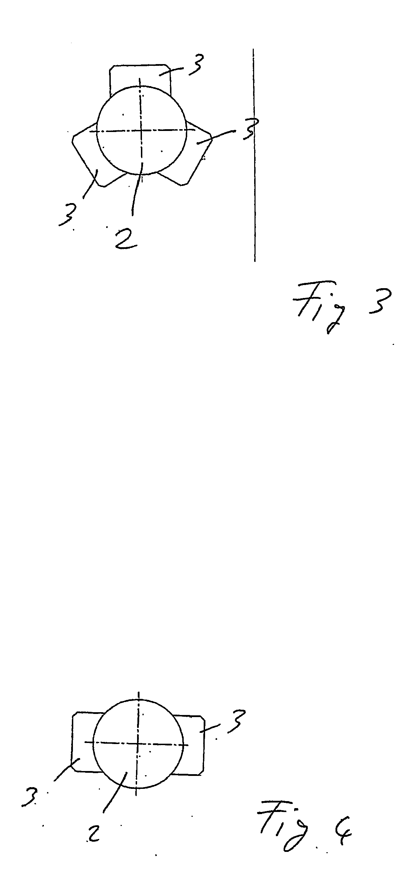

Die Figuren 3 und 4 offenbaren nicht beanpruchte Anordnungen des Antriebs.

### Fig.3:

Bei Fahrzeugen, bei welchen sich der Antriebsmotor 2 bei einer Lenkbewegung mitdreht, wie beispielsweise bei deichselgeführten Geräten, ist die Steuerung so um das Motorgehäuse zu verteilen, dass die Steuerung gleichmäßig den Radius des Motors 2 vergrößert, wodurch bei einer Drehung des Motors 2 die Steuerung 3 nicht mit anderen Bauteilen des Fahrzeugs kollidiert. In der Ausgestaltungsform der Fig. 3 ist die Steuerung 3 in drei Baugruppen aufgeteilt, welche gleichmäßig um die Drehachse des Antriebsmotors 2 verteilt angeordnet sind. Auch hier besteht die Möglichkeit, die Steuerung 3 mit dem Gehäuse des Antriebsmotors 2 zu verbinden oder das Gehäuse des Antriebsmotors 2 so auszubilden, dass die Steuerung 3 darin integriert ist. Eine Aufteilung in Leistungselektronik und Steuerelektronik ist ebenfalls möglich.

### Fig. 4:

Der Antriebsmotor 2 ist, wie der Antriebsmotor in Fig. 3, als mitdrehender Motor bei Lenkbewegungen ausgebildet, die Steuerung 3 ist jedoch in ihren Abmessungen so ausgebildet, dass sie innerhalb des Hüllkreises des Fahrzeugrades angeordnet werden kann, wodurch es ermöglicht wird, die elektronische Steuerung 3 in zwei Baugruppen aufzuteilen, welche sich gegenüberliegend am Umfang des Antriebsmotors 2 befinden. Ebenso besteht die Möglichkeit, bei Antrieben mit mitdrehenden Motoren die elektronische Steuerung so auszubilden, dass sie vollständig den Umfang des Antriebsmotors 2 umgibt. Indem die elektronische Steuerung 3 am Umfang des Antriebsmotors 2 angeordnet ist, wird der Antriebsmotor 2 nicht in vertikaler Richtung verlängert, was bei Antriebssystemen mit mitdrehenden Motoren aufgrund des geringen Bauraums in vertikaler Richtung durch eine vertikal über dem Motor angeordnete Steuerung nicht möglich ist.

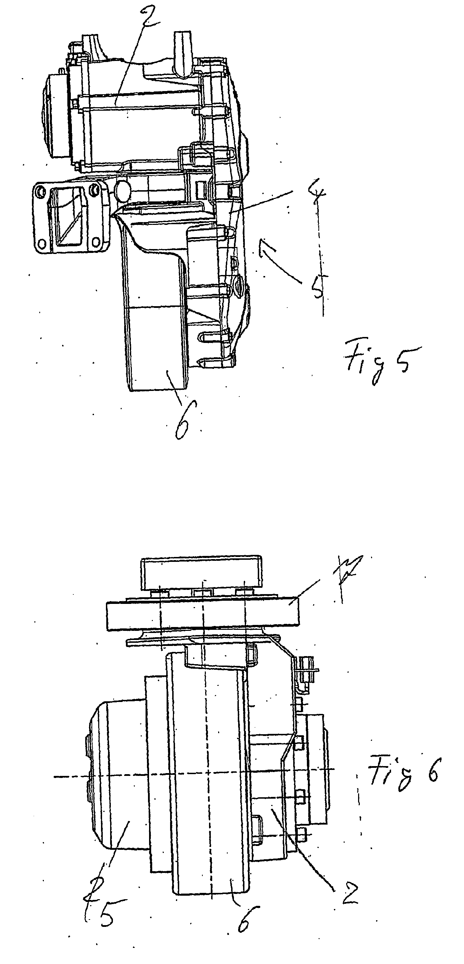

Die Figuren 5 und 6 offenbaren nicht beanspruchte Anordnungen des Antriebs.

### Fig. 5:

Bei Antrieben mit horizontalen Motoren 2 ist die elektronische Steuerung im oder am Getriebegehäuse 4 des Untersetzungsgetriebes 5 angeordnet. Dadurch ist es möglich, die elektronische Steuerung innerhalb des Hüllkreises der Motor-Getriebe-Einheit unterzubringen. Ebenso besteht die Möglichkeit, durch die Integration der elektronischen Steuerung in das Getriebegehäuse 4 oder in den Gehäusedeckel, die elektronische Steuerung durch das Schmiermittel des Untersetzungsgetriebes 5 zu kühlen.

### Fig. 6:

Bei Antrieben mit horizontalen Antriebsmotoren 2, welche innerhalb des Antriebsrades 6 angeordnet sind, ist die elektronische Steuerung 3 nicht innerhalb des Getriebegehäuses unterzubringen. Bei diesen Antrieben besteht die Möglichkeit, die elektronische Steuerung innerhalb oder oberhalb der Lagerung 7 des Antriebs im Fahrzeug unterzubringen. Die elektronische Steuerung ist in jedem Fall an dieser Stelle so unterzubringen, dass der Hüllkreis, welcher durch das Antriebsrad bestimmt wird, nicht vergrößert wird.

In einer weiteren Ausgestaltungsform wird die elektronische Steuerung durch das Schmier- und Kühlmittel des Antriebsmotors oder des Untersetzungsgetriebes gekühlt. Hierbei wird die gesamte Oberfläche des Getriebegehäues zur Wärmeabfuhr benutzt, wodurch das Kühlschmiermittel gekühlt wird und wieder zur Wärmeaufnahme für die elektronische Steuerung bereit steht. Indem die elektronische Steuerung das Kühlschmiermittel erwärmt, wird auch das Untersetzungsgetriebe bzw. das Kühl- und Schmiermittel, welches das Untersetzungsgetriebe schmiert, schneller erwärmt, was zu einem besseren Wirkungsgrad, insbeondere in der Inbetriebnahmephase des Fahrzeugs, führt.

In einer weiteren Ausgestaltungsform der Erfindung besteht die Möglichkeit, das Gehäuse der elektronischen Steuerung bzw. das Gehäuse im Bereich der elektronischen Steuerung durch Kühlrippen zusätzlich zu kühlen. Ebenso besteht die Möglichkeit, Kanäle in das Gehäuse einzubringen, durch welche Kühlmittel oder Kühlluft strömt, um die elektronische Steuerung zu kühlen.

Erfindungsgemäß wird ein Antrieb für Flurförderzeuge geschaffen, welcher sich durch eine geringere Verkabelung, verringerte Fehleranfälligkeit, insbesondere durch die Verringerung der Steck- und Schraubkontakte, sowie eine einfacherere Montage auszeichnet.

### Bezugszeichen

- 1: Antrieb
- 2: Antriebsmotor
- 3: elektronische Steuerung
- 4: Getriebegehäuse
- 5: Untersetzungsgetriebe
- 6: Antriebsrad
- 7: Lagerung

## Patentansprüche

1. Antrieb für ein Flurförderzeug, bei welchem ein Antriebsmotor (2) mit einer um eine Drehachse drehende Welle über ein Untersetzungsgetriebe (5) ein Antriebsrad (6) antreibt, wobei der Antriebsmotor (2) im eingebauten Zustand im Fahrzeug vertikal angeordnet ist, und das Antriebsrad (6) im Sinne einer Lenkbewegung drehbar ausgeführt ist, wobei der Antriebsmotor (2) während der Lenkbewegung drehfest mit dem Fahrzeug verbunden bleibt, **dadurch gekennzeichnet , dass** eine elektronische Steuerung (3) parallel zur Drehachse der Welle am oder im Gehäuse des Antriebsmotors (2) angeordnet ist, wobei die elektronische Steuerung (3) im eingebauten Zustand an der Seite des Antriebsmotors angeordnet ist, welche zur Fahrzeugseite des Fahrzeugs weist wodurch das Fahrzeug in Längsrichtung nicht verlängert wird.

2. Antrieb nach Anspruch 1, **dadurch gekennzeichnet, dass** die elektronische Steuerung in Längsrichtung des Fahrzeugs innerhalb des Hüllkreises des Antriebsrades (6) angeordnet ist.

3. Antrieb nach Anspruch 1, **dadurch gekennzeichnet, dass** die elektronische Steuerung in Richtung Fahrzeugmitte angeordnet ist, wenn der Antrieb im Fahrzeug an der Fahrzeugseite angeordnet ist.

4. Antrieb nach Anspruch 1, **dadurch gekennzeichnet, dass** die elektronische Steuerung (3) in mindestens zwei Einzelsteuerungen aufgeteilt ist, welche jeweils in Richtung, der Fahrzeugseiten am Umfang des Antriebsmotors (2) verteilt angeordnet sind.

5. Antrieb nach Anspruch 4, **dadurch gekennzeichnet, dass** die elektronische Steuerung (3) räumlich in die Einzelsteuerungen Leistungselektronik und Signalelektronik teilbar ist.

6. Antrieb nach einem der obigen Ansprüche, **dadurch gekennzeichnet, dass** die elektronische Steuerung (3) durch das Kühlschmiermittel des Antriebes (1) kühlbar ist.

7. Antrieb nach einem der obigen Ansprüche, **dadurch gekennzeichnet, dass** die elektronische Steuerung (3) ein Gehäuse aufweist, an welchem Kühlrippen angeordnet sind.

8. Antrieb nach einem der obigen Ansprüche, **dadurch gekennzeichnet, dass** das Gehäuse des Antriebes (1) Kanäle in Längsrichtung des Motors (2) aufweist, durch welche ein Kühlstrom in Form von Kühlmittel oder Luft leitbar ist.

9. Antrieb nach Anspruch 7, **dadurch gekennzeichnet, dass** die elektronische Steuerung (3) parallel zur Motordrehachse am oder im Motorgehäuse angeordnet ist.

10. Antrieb nach einem der obigen Ansprüche, **dadurch gekennzeichnet, dass** die Motore und die Steuerung (3) bei Fremdkühlung mit dem gleichen Medium gleichzeitig gekühlt werden.

## Claims

1. Drive for an industrial truck, in which a drive motor (2) with a shaft rotating about the axis of rotation drives a driving wheel (6) via a reducing gear (5), the drive motor (2) being arranged vertically in the vehicle in the installed state, and the driving wheel (6) being designed so as to be capable of rotating in the sense of a steering movement, the drive motor (2) remaining connected to the vehicle in such a way that it is fixed against rotation during the steering movement, **characterized in that** an electronic controller (3) is arranged parallel to the axis of rotation of the shaft on or in the housing of the drive motor (2), the electronic controller (3), in the installed state, being arranged on that side of the drive motor which points towards the vehicle side of the vehicle, as a result of which the vehicle is not extended in the longitudinal direction.

2. Drive according to Claim 1, **characterized in that** the electronic controller is arranged within the envelope circle of the driving wheel (6) in the longitudinal direction of the vehicle.

3. Drive according to Claim 1, **characterized in that** the electronic controller is arranged in the direction of the vehicle centre if the drive is arranged on the vehicle side in the vehicle.

4. Drive according to Claim 1, **characterized in that** the electronic controller (3) is split into at least two individual controllers, which are each arranged distributed on the circumference of the drive motor (2) in the direction of the vehicle sides.

5. Drive according to Claim 4, **characterized in that** the electronic controller (3) can be split spatially into the individual controllers, namely power electronics and signal electronics.

6. Drive according to one of the above claims, **characterized in that** the electronic controller (3) can be cooled by the cooling lubricant of the drive (1).

7. Drive according to one of the above claims, **characterized in that** the electronic controller (3) has a housing, on which cooling ribs are arranged.

8. Drive according to one of the above claims, **characterized in that** the housing of the drive (1) has channels in the longitudinal direction of the motor (2), through which channels a cooling flow in the form of coolant or air can be guided.

9. Drive according to Claim 7, **characterized in that** the electronic controller (3) is arranged parallel to the axis of rotation of the motor on or in the motor housing.

10. Drive according to one of the above claims, **characterized in that** the motors and the controller (3) are cooled simultaneously with the same medium in the case of external cooling.

## Revendications

1. Entraînement pour un chariot de manutention, dans lequel un moteur d'entraînement (2) avec un arbre tournant autour d'un axe de rotation entraîne une roue motrice (6) au moyen d'un engrenage de démultiplication (5), dans lequel le moteur d'entraînement (2) est, à l'état monté, disposé verticalement dans le véhicule, et la roue motrice (6) est pivotante au sens d'un mouvement de direction, dans lequel le moteur d'entraînement (2) reste solidaire en rotation du véhicule pendant le mouvement de direction, **caractérisé en ce qu'**une commande électronique (3) est disposée parallèlement à l'axe de rotation de l'arbre sur ou dans le boîtier du moteur d'entraînement (2), dans lequel la commande électronique (3) est, à l'état monté, disposée sur le côté du moteur d'entraînement qui est tourné vers le côté véhicule du véhicule, de telle manière que le véhicule ne soit pas prolongé dans la direction longitudinale.

2. Entraînement selon la revendication 1, **caractérisé en ce que** la commande électronique est disposée dans la direction longitudinale, à l'intérieur du cercle enveloppe de la roue motrice (6).

3. Entraînement selon la revendication 1, **caractérisé en ce que** la commande électronique est disposée en direction du milieu du véhicule, lorsque l'entraînement est disposé sur le côté du véhicule dans le véhicule.

4. Entraînement selon la revendication 1, **caractérisé en ce que** la commande électronique (3) est divisée en au moins deux commandes individuelles, qui sont réparties sur la périphérie du moteur d'entraînement (2) chaque fois en direction des côtés du véhicule.

5. Entraînement selon la revendication 4, **caractérisé en ce que** la commande électronique (3) peut être divisée spatialement en commandes individuelles d'électronique de puissance et d'électronique de signalisation.

6. Entraînement selon l'une quelconque des revendications précédentes, **caractérisé en ce que** la commande électronique (3) peut être refroidie par le lubrifiant de refroidissement de l'entraînement (1).

7. Entraînement selon l'une quelconque des revendications précédentes, **caractérisé en ce que** la commande électronique (3) comprend un boîtier, sur lequel il est prévu des ailettes de refroidissement.

8. Entraînement selon l'une quelconque des revendications précédentes, **caractérisé en ce que** le boîtier de l'entraînement (1) présente des canaux dans la direction longitudinale du moteur (2), à travers lesquels un courant de refroidissement sous la forme d'un agent réfrigérant ou d'air peut être conduit.

9. Entraînement selon la revendication 7, **caractérisé en ce que** la commande électronique (3) est disposée parallèlement à l'axe de rotation du moteur sur ou dans le boîtier du moteur.

10. Entraînement selon l'une quelconque des revendications précédentes, **caractérisé en ce que** les moteurs et la commande (3) sont refroidis simultanément avec le même fluide lorsque le refroidissement est extérieur.
